# EUROPÄISCHE PATENTSCHRIFT

(11) **EP 2 466 155 B1**
(45) Veröffentlichungstag und Bekanntmachung des Hinweises auf die Patenterteilung: **13.02.2013**
(21) Anmeldenummer: 10015692.6
(22) Anmeldetag: 15.12.2010
(51) Int. Cl.: F15B 13/01, F15B 13/02

(54) **Hydraulisch entsperrbares Rückschlag-Sitzventil**
Hydraulically unlocked return-seat valve
Soupape à siège anti-retour déverrouillable de manière hydraulique

(43) Veröffentlichungstag der Anmeldung: 20.06.2012
(73) Patentinhaber: HAWE Hydraulik SE, 81673 München (DE)
(72) Erfinder: Macit, Recept, 81637 München (DE); Manhart, Anton, 84405 Dorfen (DE); Heusser, Martin, 81245 München (DE)
(74) Vertreter: Grünecker, Kinkeldey, Stockmair & Schwanhäusser

(56) Entgegenhaltungen:
- DE-A1- 19 856 018
- DE-A1- 19 919 014
- US-B1- 6 223 773

## Beschreibung

Die Erfindung betrifft ein hydraulisch entsperrbares Rückschlag-Sitzventil gemäß Oberbegriff des Patentanspruchs 1.

Ein gattungsgemäßes Rückschlag-Sitzventil als Teil einer Einschraubverschraubung ist aus EP 2 157 321 A, Fig. 5, bekannt. Zum hydraulischen Entsperren greift der Entsperr-Ringkolben mit seinem Fortsatz direkt am Schließelement an, um dieses gegen den Sperrdruck vom Ventilsitz abzuheben. Der wichtige Vorteil einer geraden, axialen und verlustarmen Durchströmung des Rückschlag-Sitzventils wird dadurch etwas gemindert, dass die Arbeitsströmung nach innen in das Schließelement umgelenkt wird. Das Aufsteuerverhältnis (beispielsweise das Verhältnis zwischen dem Entsperrdruck und dem Sperrdruck) wird durch die baulichen Gegebenheiten unerwünscht begrenzt, d.h. durch den Außendurchmesser des Gehäuses, den Innendurchmesser des Längsdurchgangs, der Beaufschlagungsfläche des Entsperr-Ringkolbens und dem Innendurchmesser des Ventilsitzes. Somit kann es bei dem bekannten Ventil erforderlich werden, beispielsweise zum Entsperren gegen einen Sperrdruck von 100 bar einen Entsperrdruck von mindestens 20 bar zu erzeugen bzw. gegen einen Sperrdruck von 200 bar sogar mehr als 40 bar auf den Entsperr-Ringkolben aufzubringen.

Bei einem aus DE 199 19 014 A bekannten Hydraulikventil mit Verriegelungs- und Schwimmfunktion sind die Druckanschlüsse im Gehäuse seitlich angeordnet, was eine unerwünschte Strömungsumlenkung bei Ausführen der Ventilfunktion bedingt. Das Schließelement ist ein Schieberkolben mit beidendigen Sitzflächen, einem mittigen Dichtbund, und seitlichen Auslässen zwischen einem entlang der Gehäusehauptachse verlaufenden Innenkanal und außenliegenden Umfangsnuten, die bei der Ventilfunktion zusätzliche Strömungsumlenkungen bedingen, um leckagebehaftete Dichtbereiche zwischen dem Außenumfang des Schließgliedes und der Gehäusebohrung zu umgehen. Das jeweilige Entsperr-Vorentlastungsventil weist als Pilotventilelement eine Kugel auf, die in einem durchbohrten, vom Schließelement getrennt gefertigten und im Schließelement durch eine Feder gesicherten Topfkolben in Richtung der Gehäusehauptachse beweglich geführt wird.

Bei einem aus DE 198 56 018 A bekannten entsperrbaren Rückschlagventil für sehr hohe Systemdrücke wird das Rückschlagventil vom Systemdruck ohne Vorentlastung entsperrt, wobei der Strömungsweg in Richtung der Gehäusehauptachse zwischen an sich gegenüberliegenden Gehäuseenden als Innengewindebohrungen ausgebildeten Druckanschlüssen verläuft.

Der Erfindung liegt die Aufgabe zugrunde, ein hydraulisch entsperrbares Rückschlag-Sitzventil der eingangs genannten Art zu schaffen, das mit dem Vorteil eines geraden axialen und verlustarmen Durchströmweges für die Arbeitsströmungen gegebenenfalls trotz baulicher Beschränkungen durch die Abmessungen vor allem in Durchmesserrichtung ein günstiges Aufsteuerverhältnis ermöglicht, d.h., selbst bei hohem Sperrdruck mit günstig niedrigem Entsperrdruck entsperrbar ist.

Die gestellte Aufgabe wird erfindungsgemäß mit den Merkmalen des Patentanspruchs 1 gelöst.

Zum hydraulischen Entsperren betätigt der Entsperr-Ringkolben zunächst das Entsperr-Vorentlastungsventil, so dass der Sperrdruck entweder deutlich vermindert wird oder sich die Drücke an beiden axialen Seiten des Ventilsitzes einigermaßen angleichen, so dass der Entsperr-Ringkolben in der Folge das Schließelement leicht vom Ventilsitz abzuheben vermag. Hierfür ist nur moderater Entsperrdruck erforderlich, da der am Entsperr-Vorentlastungsventil in Sperrrichtung wirkende Sperrdruck dort nur eine relativ kleine Beaufschlagungsfläche hat, und die wesentlich größere Beaufschlagungsfläche im Ventilsitz dann nicht mehr durch den vollen Sperrdruck wirksam ist, wenn das Entsperr-Vorentlastungsventil den Sperrdruck vermindert oder die Drücke beiderseits des Ventilsitzes einigermaßen angeglichen hat. Dank des Entsperr-Vorentlastungsventils kann durchaus ein Aufsteuerverhältnis von 1 : 25 bis sogar 1 : 30 oder noch kleiner erzielt werden, so dass sich das Rückschlag-Sitzventil auch bei hohem Sperrdruck von beispielsweise 200 bar oder mehr mit relativ geringem Entsperrdruck hydraulisch entsperren lässt und dann ohne nennenswerte Umlenkung verlustarm axial durchströmt wird. Die in Sperrrichtung von dem Rückschlag-Sitzventil zu erwartende Leckagefreiheit wird durch das Entsperr-Vorentlastungsventil nicht gefährdet, da das Entsperr-Vorentlastungsventil ebenfalls durch den Sperrdruck leckagefrei dicht blockiert wird, solange der Entsperr-Ringkolben nicht aktiv betätigt ist. Dabei ist das Schließelement ein Kolben mit der daran stirnseitig angeordneten Sitzfläche und umfangsseitigen axialen Führungsrippen, zwischen denen axiale Strömungswege vorgesehen sind. Die Arbeitsströmung verläuft somit außen dem Kolben entlang und zwischen den Führungsrippen im Längsdurchgang, wodurch unzweckmäßige Strömungsumlenkungen oder - Einschnürungen vermieden werden.

Aus der technischen Informationsschrift "Entsperrbares Rückschlagventil mit Voröffnung SCD5H-R3/I", HD 5219, 11/2006, Seiten 1 - 4, der Firma Argo-Hytos a.s., CZ-54315 Vrchlabi, (E-mail: sales.cz@argo-hytos.com) ist zwar ein als Einschraubpatrone ausgebildetes, hydraulisch entsperrbares Rückschlagventil einer anderen Bauart bekannt, das u.a. dadurch ein günstiges Aufsteuerverhältnis hat, weil der Entsperrkolben voreilend zum Abheben des Schließelementes ein kleiner Entsperr-Vorentlastungsventil öffnet. Jedoch muss sowohl bei nur druckabhängigem Öffnen als auch bei einer hydraulischen Entsperrung bauartbedingt die jeweilige Arbeitsströmung durch das Rückschlag-Sitzventil von innen nach außen bzw. umgekehrt umgelenkt werden, was unzweckmäßige Drosselverluste und eine hohe mechanische Belastung des Hydraulikmediums bedingt, d.h., es ist bauartbedingt keine axiale und verlustarme gerade Arbeitsströmung möglich. Ferner ergibt sich das günstige Aufsteuerverhältnis auch deswegen, weil der Entsperrkolben eine Vollkreis-Beaufschlagungsfläche für den Entsperrdruck besitzt, deren Durchmesser annähernd so groß ist, wie der Gehäuseaußendurchmesser beim Arbeitsströmungsweg, da der Arbeitsströmungsweg den Entsperrkolben nicht durchsetzt, sondern im Abstand davon umgelenkt wird, so dass genügend Bauraum für einen großflächigen Entsperrkolben geschaffen ist.

In das aus EP 2 157 321 A, Fig. 5, bekannte Rückschlag-Sitzventil ist für eine zusätzliche Ventilfunktion ein Druckbegrenzungsventil eingegliedert, das in Sperrrichtung anspricht. Bei einer zweckmäßigen Ausführungsform des Erfindungsgegenstandes ist ebenfalls eine Druckbegrenzungsfunktion in das Rückschlag-Sitzventil eingegliedert. Vorteilhaft wird das Druckbegrenzungsventil gleichzeitig vom Entsperr-Vorentlastungsventil gebildet, das somit zwei unterschiedliche Funktionen erfüllt, da es einerseits ein günstiges Aufsteuerverhältnis ermöglicht, und andererseits die Druckbegrenzungsfunktion erbringt.

Besonders zweckmäßig ist das Gehäuse ein Ermeto-Gehäuse mit beidendigen Außengewinde-abschnitten. Somit ist das Rückschlag-Sitzventil, mit oder ohne Druckbegrenzungsfunktion, auf engstem Raum installierbar, um beispielsweise eine Druckleitung an einen Block oder einen Hydroverbraucher anzuschließen und dabei einen kurzen geraden Arbeitsströmungsweg in jeder Strömungsrichtung zu gewährleisten.

Um den in Durchmesserrichtung gegebenenfalls beschränkten Bauraum im Gehäuse optimal zu nutzen, umfasst ein von außen seitlich in das Gehäuse mündender EntsperrDruckkanal einen im Wesentlichen axial orientierten Kanalabschnitt im Inneren des Entsperr-Ringkolbens. Dadurch lässt sich die Mündung des Entsperr-Druckkanals an optimaler Position am Gehäuse platzieren, und werden keine zusätzlichen Kanäle im Gehäuse benötigt, da der Kanalabschnitt im Entsperr-Ringkolben dorthin verläuft, wo der Entsperr-Ringkolben zum Entsperren beaufschlagt wird.

Ferner ist es zweckmäßig, wenn im Längsdurchgang ein eine Ringkammer für den Entsperr-Ringkolben definierender Hülseneinsatz und/oder die Schließfeder jeweils durch Sicherungsringe im Längsdurchgang abgestützt sind. Dies vereinfacht die Montage und Demontage.

Herstellungs- und montagetechnisch zweckmäßig ist der Ventilsitz in einem im Längsdurchgang positionierten Ringeinsatz vorgesehen. Der Ringeinsatz kann beispielsweise durch einen Sicherungsring gesichert sein, oder eingeschraubt oder in einem Presssitz positioniert werden.

Das Entsperr-Vorentlastungsventil weist zweckmäßig als Pilotventilelement eine Kugel oder einen Pilzkopf auf, und einen im Vorentlastungs-Strömungsweg im Schließelement angeordneten Pilotsitz. Das Pilotventilelement kann durch eine Pilotfeder in Richtung zum Pilotventilsitz beaufschlagt sein. Der Pilotventilsitz ist wie die Pilotfeder in einer Axialbohrung im Schließelement untergebracht. Zweckmäßig ist der Innendurchmesser der Axialbohrung größer als der Innendurchmesser des Pilotventilsitzes, der selbst erheblich kleiner ist als der Ventilsitz, um selbst bei hohem Sperrdruck das Entsperr-Vorentlastungsventil mit niedrigem Entsperrdruck öffnen zu können.

Für den Fall, dass das Entsperr-Vorentlastungsventil keine Druckbegrenzungsfunktion zu erfüllen hat, kann zweckmäßig die Axialbohrung Teil des Vorentlastungs-Strömungsweges durch das Schließelement sein und ein, vorzugsweise verschraubbares, und hohles Federwiderlager für die Pilotfeder enthalten.

Hingegen kann es zweckmäßig sein, dann, wenn das Entsperr-Vorentlastungsventil auch die Druckbegrenzungsfunktion zu erfüllen hat, in der Axialbohrung ein, vorzugsweise verschraubbares, Federwiderlager für die Pilotfeder anzuordnen, und die Axialbohrung mittels des Federwiderlagers zu verschließen, hingegen den Vorentlastungs-Strömungsweg durch Querkanäle im Schließelement auszubilden, die an der Sperrdruckseite des Ventilsitzes münden. Der Vorentlastungs-Strömungsweg wird hier entweder zur Vorentlastung oder für die Druckbegrenzungsfunktion benutzt.

Bei einer zweckmäßigen Ausführungsform weist der am Entsperr-Ringkolben angeordnete axiale Vorsprung einen Betätigungszapfen für das Entsperr-Vorentlastungsventil auf, dessen Außendurchmesser, vorzugsweise, deutlich kleiner ist als der Außendurchmesser des Pilotventilelementes. Der Betätigungszapfen taucht z.B. in den Vorentlastungs-Strömungsweg ein, z.B. in eine Mündung in der Stirnseite des Schließelementes, und bei Beaufschlagen des Entsperr-Ringkolbens mit dem Entsperrdruck direkt am Pilotventilelement an, um dieses vom Pilotventilsitz abzuheben. Über den Vorentlastungs-Strömungsweg wird der Sperrdruck dann vermindert, so dass der Entsperr-Ringkolben das Schließelement nachfolgend leicht vom Ventilsitz abzuheben vermag. Dabei ist am Vorsprung des Entsperr-Ringkolbens angrenzend an den Betätigungszapfen zum direkten Angriff am Schließelement eine Schulter vorgesehen. Mit der Schulter hebt der Entsperr-Ringkolben bei aufgesteuertem Entsperr-Vorentlastungsventil dann das Schließelement vom Ventilsitz ab. Alternativ könnte das Pilotventilelement auf Anschlag, z.B. über die zusammengedrückte Pilotfeder und/oder in der Axialbohrung kommen, so dass dann die vom Betätigungszapfen auf das Pilotventilelement aufgebrachte Entsperrkraft direkt auf das Schließelement übertragen wird und dieses abhebt.

Anhand der Zeichnung werden Ausführungsformen des Erfindungsgegenstandes erläutert. Es zeigen:
- Fig. 1: einen Längsschnitt einer ersten Ausführungsform eines hydraulisch entsperrbaren Rückschlag-Sitzventils, in drucklosem Zustand, und
- Fig. 2: einen Längsschnitt einer zweiten Ausführungsform, ebenfalls in drucklosem Zustand.

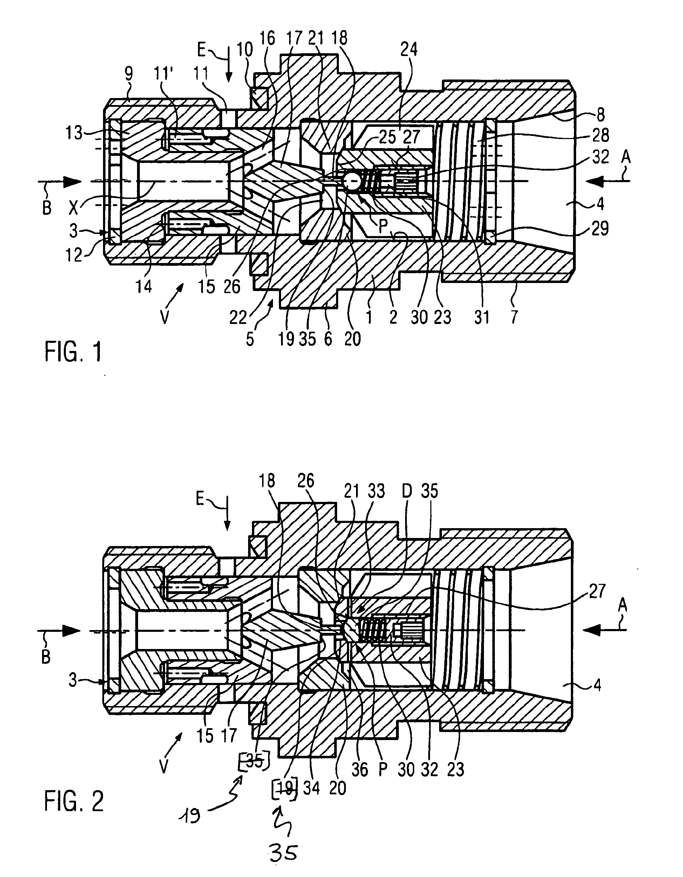

Eine erste Ausführungsform eines in Fig. 1 gezeigten, hydraulisch entsperrbaren Rückschlag-Sitzventiles V weist ein Gehäuse 1, beispielsweise aus Stahl, auf, das in der gezeigten Ausführungsform als Ermeto-Gehäuse ausgebildet ist, beispielsweise um mit geringem Einbauraumbedarf eine Druckleitung an einen Block oder einen Verbraucher oder ein Steuerventil anzuschließen, und verlustarme axiale gerade Arbeitsströmungen zu ermöglichen. Das Gehäuse 1 ist jedoch in seiner Ausbildung nicht auf ein Ermeto-Gehäuse 5 beschränkt, sondern könnte auch ein anderes Gehäuse, beispielsweise ein Einschraubgehäuse einer Einschraubventil-Patrone sein.

Das Gehäuse 1 definiert in Richtung seiner Gehäusehauptachse X einen koaxialen Längsdurchgang 2, der als Stufenbohrung ausgebildet ist, und sich axial von einem Gehäusende (Druckanschluss 3) zum gegenüberliegenden Gehäuseende (Druckanschluss 4) erstreckt.

Bei Ausbildung des Gehäuses 1 als Ermeto-Gehäuse 5 sind beidendige Außengewindeabschnitte 7, 9 (unterschiedliche Durchmesser), im Druckanschluss 4 ein innenliegender Dichtkonus 8, eine äußere Schraubhandhabe 6, z.B. ein Außensechskant, und eine Abdichtung 10 vorgesehen. In anderen Ausführungsformen des Gehäuses 1 können diese Strukturen entfallen und/oder durch andere Strukturen ersetzt sein.

In das Gehäuse 1 mündet seitlich ein Entsperr-Druckkanal 11, der beispielsweise wenigstens eine Radialbohrung bis in den Längsdurchgang 2 ist. Im in Fig. 1 linken Gehäuseende ist ein Hülseneinsatz 13 mittels eines Sicherungsringes 12 festgelegt, der eine Ringkammer 14 eines Entsperr-Ringkolbens 15 begrenzt, der durch den Entsperrdruck in der Ringkammer 14 in Fig. 1 nach rechts zum Entsperren verschiebbar ist, und Kanalabschnitte 11' enthält, die axial verlaufen und Teil des Entsperr-Druckkanals 11 sind. Im Entsperr-Ringkolben 15 sind mehrere Arbeitsströmungs-Durchgänge 16 um einen axialen Vorsprung 17 verteilt, an dessen Ende über eine Schulter 19 ein kleindurchmessriger Betätigungszapfen 18 axial vorsteht. In etwa in der Längsmitte des Gehäuses 1 ist im Längsdurchgang 2 ein Ringeinsatz 20 positioniert, beispielsweise mit einem Presssitz, der einen Ventilsitz 21 definiert und von einem zentralen Kanal 22 durchsetzt wird. An der dem Entsperr-Ringkolben 15 abgewandten Axialseite des Ringeinsatzes 20 ist im Längsdurchgang ein Schließelement 23 axial verschiebbar angeordnet, das z.B. ein Kolben (oder Kegel) ist, an dessen Außenseite axiale Führungsrippen 24 angeformt sind, zwischen welchen Strömungsdurchgänge definiert werden. Am Stirnende des Schließelementes 23 ist eine hier z.B. ballige Sitzfläche 25 geformt, die mit dem Ventilsitz 21 (einer Kante oder Fase) zusammenarbeitet. Im Schließelement 23 ist eine Axialbohrung 27 vorgesehen, die einen Pilotventilsitz 26 eines Entsperr-Vorentlastungsventils P enthält, das in Fig. 1 als Pilotventilelement 35 eine Kugel aufweist, deren Durchmesser nur einen Bruchteil des Durchmessers des Kanals 22 beträgt. Das Pilotventilelement 35 wird in Fig. 1 von einer Pilotfeder 30 in Richtung zum Pilotventilsitz 26 beaufschlagt. Die Pilotventilfeder 30 stützt sich an einem Federwiderlager 32 ab, das, vorzugsweise verschraubbar, in der Axialbohrung 27 positioniert ist, und in Fig. 1 hohl mit einem Längsdurchgang 31 als Teil eines Vorentlastungs-Strömungsweges ausgebildet ist, der seine offene Mündung 34 (Fig. 2) an der Stirnseite des Schließelementes 23 hat.

Das in Fig. 1 gezeigte Rückschlag-Sitzventil V hat eine Sperrrichtung A, in der Sperrdruck leckagefrei gehalten wird, sobald jeweils vom Sperrdruck die Sitzfläche 25 am Ventilsitz 21 anliegt, und das Pilotventilelement 35 am Pilotventilsitz 26 angepresst ist. Wird im Druckanschluss 3 ein Druck aufgebaut, der auf der Beaufschlagungsfläche entsprechend dem Querschnitt des Kanals 22 die Kraft der Schließfeder 28 und gegebenenfalls des in Sperrrichtung A wirksamen Sperrdrucks überwindet, dann wird das Schließelement 23 mit einer üblichen Rückschlagfunktion vom Ventilsitz 21 abgehoben, so dass in Durchströmrichtung B im Wesentlichen ungedrosselter axialer Durchfluss vom Druckanschluss 3 zum Druckanschluss 4 möglich ist.

Um bei in Sperrrichtung A anstehendem Sperrdruck oder nur gegen die Schließfeder 28 aktiv zu entsperren, wird der Entsperr-Ringkolben 15 mit Entsperrdruck E über den Entsperr-Druckkanal 11 beaufschlagt, bis der Betätigungszapfen 18 zunächst das Vorentlastungsventil P öffnet und nacheilend beispielsweise über die Schulter 19 das Schließelement 23 vom Ventilsitz 21 abgehoben wird. Sollte dabei Sperrdruck in Sperrrichtung A wirken, wird dieser Sperrdruck nach Öffnen des Vorentlastungsventils B über diesen und durch einen dann durchgängigen Vorentlastungs-Strömungsweg vermindert oder abgebaut, so dass der Entsperr-Ringkolben 15 anschließend das Schließelement 23 leicht abzuheben vermag. Es ist durchaus ein Aufsteuerverhältnis von 1 : 25 bis 1 : 30 oder weniger möglich. Wird der Entsperrdruck E abgebaut, dann drückt die Schließfeder 28 (auch die Pilotfeder 30) den Entsperr-Ringkolben 15 wieder in die gezeigte Ausgangslage zurück, so dass das Rückschlag-Sitzventil V wieder seine Sperrstellung einnimmt. Gegebenenfalls wird der Entsperr-Ringkolben 15 durch eine nicht gezeigte Rückstellfeder beaufschlagt.

Die Ausführungsform des hydraulisch entsperrbaren Rückschlag-Sitzventils V in Fig. 2 unterscheidet sich von der der Fig. 1 dadurch, dass das Entsperr-Vorentlastungsventil P gleichzeitig auch die Funktion eines Druckbegrenzungsventils D erfüllt, welches Druckbegrenzungsventil D in Sperrrichtung A öffnet, indem es auf einen voreingestellten Druckwert anspricht, beispielsweise voreingestellt durch die Pilotfeder 30.

Beim normalen hydraulischen Entsperren in Fig. 2 wirkt das Entsperr-Vorentlastungsventil P wie das anhand Fig. 1 erläuterte, mit dem Unterschied, dass der Vorentlastungs-Strömungsweg im Schließelement 23 nicht durch die Axialbohrung 27 verläuft, sondern zusätzlich Querkanäle 33 vorgesehen sind, die an der dem Entsperr-Ringkolben 15 abgewandten Seite des Pilotventilsitzes 21 zur Sperrdruckseite des Ventilsitzes 21 führen. Aus strömungsdynamischen Gründen kann angrenzend an den Ventilsitz 21 im Übrigen im Ringeinsatz 20 eine Auskehlung 36 geformt sein.

Das Pilotventilelement 35 in Fig. 2 hat die Form eines Pilzkopfes mit einer sphärischen Sitzfläche und einem zylindrischen Außenumfangabschnitt, der mit einer relativ engen Gleitpassung in der Axialbohrung 27 geführt wird, so dass der Sperrdruck über die Querkanäle 33 eine in Fig. 2 nach rechts gerichtete Kraft auf das Pilotventilelement 35 aufbringt, um dieses für die Druckbegrenzungsfunktion gegen die Pilotfeder 30 vom Pilotventilsitz 21 abzuheben, und überschüssigen Sperrdruck durch eine an der Stirnseite mündende Bohrung 34 im Schließelement 23 zum Druckanschluss 3 abzubauen, selbst wenn der Betätigungszapfen 18 nicht am Pilotventilelement 35 angreift.

In Fig. 2 steht in der gezeigten Position (linke Endposition, drucklose Kondition) des Entsperr-Ringkolbens 15 der Betätigungszapfen 18 dem Pilotventilelement 35 sicherheitshalber mit einem geringfügigen axialen Abstand gegenüber der bei Abbau des Entsperrdruckes E z.B. vom Druck im Längsdurchgang 2 hergestellt wird.

Bei einer nicht gezeigten Alternative könnten das Entsperr-Vorentlastungsventil P und das Druckbegrenzungsventil D voneinander separat entweder nebeneinander oder hintereinander im Schließelement 23 untergebracht sein. Der Ausführungsform, in der das Entsperr-Vorentlastungsventil P und das Druckbegrenzungsventil D von derselben Komponentengruppe gebildet werden, wird der Vorzug gegeben.

## Patentansprüche

1. Hydraulisch entsperrbares Rückschlag-Sitzventil (V), mit einem einen mit Entsperrdruck (E) beaufschlagbaren Entsperr-Ringkolben (15) enthaltenden Gehäuse (1), das einen einen Ventilsitz (21) enthaltenden, innenliegenden Längsdurchgang (2) bildet, der entlang einer Gehäusehauptachse (X) von einem Druckanschluss (3) und durch den Entsperr-Ringkolben (15) zu einem weiteren Druckanschluss (4) verläuft, und mit einem im Längsdurchgang (2) relativ zum Ventilsitz (21) axial beweglichen Schließelement (23), an dem eine Sitzfläche (25) angeordnet ist, mit der das Schließelement (23) zumindest durch eine im Längsdurchgang (2) angeordnete Schließfeder (28) an dem Ventilsitz (21) haltbar ist, wobei zum aktiven Entsperren das Schließelement (23) über einen Vorsprung (17) mittels des Entsperr-Ringkolbens (15) vom Ventilsitz (21) abhebbar ist, und wobei im Schließelement (23) in einem im Schließelement (23) die Sitzfläche (25) umgehenden, mit beiden Druckanschlüssen (3, 4) kommunizierenden Vorentlastungs-Strömungsweg (31, 33, 34) ein gegenüber dem Ventilsitz (21) kleineres Entsperr-Vorentlastungsventil (P) angeordnet ist, das zum Entsperren des Rückschlag-Sitzventils (V) mittels des Entsperr-Ringkolbens (15) voreilend zum Abheben des Schließelementes (23) vom Ventilsitz (21) in Öffnungsrichtung betätigbar ist, **dadurch gekennzeichnet, dass** die Druckanschlüsse (3, 4) an sich in der Gehäusehauptachse (X) gegenüberliegenden Gehäuseenden ausgebildet sind, und dass das Schließelement (23) ein Kolben mit der daran stirnseitig angeordneten Sitzfläche (25) und umfangsseitigen Führungsrippen (24) ist, zwischen denen axiale Arbeitsströmungswege vorgesehen sind.

2. Hydraulisch entsperrbares Rückschlag-Sitzventil nach Anspruch 1, **dadurch gekennzeichnet, dass** das Entsperr-Vorentlastungsventil (P) im Rückschlag-Sitzventil (V) gleichzeitig ein in Sperrrichtung (A) öffnendes Druckbegrenzungsventil (D) bildet.

3. Hydraulisch entsperrbares Rückschlag-Sitzventil nach Anspruch 1, **dadurch gekennzeichnet, dass** das Gehäuse (1) ein Ermeto-Gehäuse (5) mit beidendigen Außengewinde-Abschnitten (7, 9) ist.

4. Hydraulisch entsperrbares Rückschlag-Sitzventil nach Anspruch 1, **dadurch gekennzeichnet, dass** ein von außen seitlich in das Gehäuse (1) mündender Entsperrdruck-Kanal (11) wenigstens einen im Wesentlichen axial orientierten Kanalabschnitt (11') im Inneren des Entsperr-Ringkolbens (15) umfasst.

5. Hydraulisch entsperrbares Rückschlag-Sitzventil nach Anspruch 1, **dadurch gekennzeichnet, dass** ein im Längsdurchgang (2) eine Ringkammer (14) für den Entsperr-Ringkolben (15) definierender Hülseneinsatz (13) und die Schließfeder (28) durch Sicherungsringe (12, 29) im Längsdurchgang (2) abgestützt sind.

6. Hydraulisch entsperrbares Rückschlag-Sitzventil nach Anspruch 1, **dadurch gekennzeichnet, dass** das Entsperr-Vorentlastungsventil (P) als Pilotventilelement (35) eine Kugel oder einen Pilzkopf sowie einen im Vorentlastungs-Strömungsweg angeordneten Pilotventilsitz (26) umfasst, und dass das Pilotventilelement (35) durch eine in einer Axialbohrung (27) im Schließelement (23) abgestützte Pilotfeder (30) in Richtung zum Pilotventilsitz (26) beaufschlagt ist, wobei, vorzugsweise, der Innendurchmesser der Axialbohrung (27) im Bereich des Pilotventilelementes (35) größer ist als der Innendurchmesser des Pilotventilsitzes (26).

7. Hydraulisch entsperrbares Rückschlag-Sitzventil nach Anspruch 6, **dadurch gekennzeichnet, dass** die Axialbohrung (27) Teil des Vorentlastungs-Strömungsweges ist, und, vorzugsweise, ein verschraubbares, hohles Federwiderlager (32) für die Pilotfeder (30) enthält.

8. Hydraulisch entsperrbares Rückschlag-Sitzventil nach Anspruch 6, **dadurch gekennzeichnet, dass** in der Axialbohrung (27) ein, vorzugsweise verschraubbares, die Axialbohrung verschließendes Federwiderlager (32) für die Pilotfeder (30) angeordnet ist, mit der der Ansprechdruck des Druckbegrenzungsventils (D) definiert wird, und dass an der dem Entsperr-Ringkolben (15) abgewandten Seite des Pilotventilsitzes (26) im Schließelement (23) Querkanäle (33) zur Sperrdruckseite des Ventilsitzes (21) im Längsdurchgang (2) vorgesehen sind.

9. Hydraulisch entsperrbares Rückschlag-Sitzventil nach Anspruch 1, **dadurch gekennzeichnet, dass** der am Entsperr-Ringkolben (15) angeordnete, axiale Vorsprung (17) einen Betätigungszapfen (18) aufweist, dessen Außendurchmesser kleiner ist als der Außendurchmesser des Pilotventilelementes (35), und dass am Vorsprung (17) angrenzend an den Zapfen (18) zum direkten Angriff am Schließelement (23) eine Schulter (19) vorgesehen ist.

## Claims

1. Hydraulically unlockable check seat valve (V), comprising a housing (1) accommodating an unlocking ring piston (15) which is to be actuated by an unlocking pressure, the housing (1) forming an interior longitudinal passage (2) containing a valve seat (21), the longitudinal passage extending along a housing main axis (X) from one pressure port (3) through the unlocking ring piston (15) to a further pressure port (4), and a closing element (23) being axially moveable in the longitudinal passage (2) relative to the valve seat (21), at which closing element (23) a seat surface (25) is provided with which the closing element (23) can be held at the valve seat (21) at least by a closing spring (28) arranged in the longitudinal passage (2), wherein for actively unlocking the check seat valve (V) the closing element (23) can be lifted from the valve seat (21) by means of the unlocking ring piston (15) via a projection (17), and wherein a pre-unloading valve (P) is arranged in the closing element (23) within a pre-unloading flow path (31, 33, 34) deviating the seat surface (25) in the closing element (23) and communicating with both pressure ports (3, 4), the unlocking pre-unloading valve (P) being smaller than the valve seat (21) and being actuated for unlocking the check seat valve (V) by means of the unlocking ring piston (15) in opening direction in advance to lifting the closing element (23) from the valve seat (21), **characterised in that** the pressure ports (3, 4) are formed at housing ends which are opposite to each other in the direction of the housing main axis (X), and that the closing element (23) is a piston having the seat surface (25) at a front side and having guiding ribs (24) at the periphery between which guiding ribs axial working flow paths are defined.

2. Hydraulically unlockable check seat valve according to claim 1, **characterised in that** the pre-unloading valve (P) in the check seat valve (V) at the same time forms a pressure limiting valve (D) opening in the locked flow direction (A) of the check seat valve (V).

3. Hydraulically unlockable check seat valve according to claim 1, **characterised in that** the housing (1) is an Ermeto housing (5) having exterior thread sections (7, 9) at both ends.

4. Hydraulically unlockable check set valve according to claim 1, **characterised in that** an unlocking pressure channel (1) opening from the exterior sidewards into the housing (1) comprises at least one substantially axially oriented channel section (11') in the interior of the unlocking ring piston (15).

5. Hydraulically unlockable check seat valve according to claim 1, **characterised in that** a sleeve insert (13) defining within the longitudinal passage (2) a ring chamber (14) for the unlocking ring piston (15) and the closing spring (28) are supported in the longitudinal passage (2) by safety rings (12, 29).

6. Hydraulically unlockable check seat valve according to claim 1, **characterised in that** the pre-unloading valve (P) comprises as a pilot valve element (35) a ball or a mushroom head as well as a pilot valve seat (26) arranged in the pre-unloading flow path, and that the pilot valve element (35) is loaded in a direction towards the pilot valve seat (26) by a pilot spring (30) supported in an axial bore (27) in the closing element (23), wherein, preferably, the inner diameter of the axial bore (27) is larger in the region of the pilot valve element (35) than the inner diameter of the pilot valve seat (26).

7. Hydraulically unlockable check seat valve according to claim 6, **characterised in that** the axial bore (27) is part of the pre-unloading flow path, and, preferably, accommodates a hollow thread spring retainer (34) for the pilot spring (30).

8. Hydraulically unlockable check seat valve according to claim 6, **characterised in that** a spring retainer (32) for the pilot spring (39) is arranged in the axial bore (27) and closes the axial bore, preferably is arranged threadable, the pilot spring (30) defining the response pressure of the pressure limiting valve (D), and that lateral channels (33) leading to the locking pressure side of the valve seat (21) within the longitudinal passage (2) are provided in the closing element (23) at the sides of the pilot valve seat (26) remote from the unlocking ring piston (15.

9. Hydraulically unlockable check seat valve according to claim 1, **characterised in that** the axial projection (17) arranged at the unlocking ring piston (15) has an actuating pin (18), the outer diameter of which is smaller than the outer diameter of the pilot valve element (35), and that for direct engagement at the closing element (23) a shoulder (19) is provided at the projection (17) adjacent to the pin (18).

## Revendications

1. Soupape à siège anti-retour (V) à déverrouillage hydraulique, comprenant un corps (1) qui contient un piston annulaire de déverrouillage (15) pouvant être sollicité par la pression de déverrouillage (E), lequel corps forme un passage longitudinal (2) intérieur, qui contient un siège de soupape (21) et s'étend le long d'un axe principal de corps (X) d'un raccord de pression (3) et, au travers du piston annulaire de déverrouillage (15), en direction d'un raccord de pression (4) supplémentaire, et un élément de fermeture (23), mobile dans la direction axiale dans le passage longitudinal (2) par rapport au siège de soupape (21), et sur lequel est disposée une surface de siège (25), par laquelle l'élément de fermeture (23) peut être maintenu sur le siège de soupape (21) au moins par un ressort de fermeture (28) disposé dans le passage longitudinal (2), l'élément de fermeture (23), pour le déverrouillage actif, pouvant être décollé du siège de soupape (21) par l'intermédiaire d'une saillie (17), au moyen du piston annulaire de déverrouillage (15), et une soupape de pré-détente de déverrouillage (P), plus petite par rapport au siège de soupape (21), étant disposée dans l'élément de fermeture (23), dans un parcours d'écoulement de pré-détente (31, 33, 34), qui contourne dans l'élément de fermeture (23) la surface de siège (25) et communique avec les deux raccords de pression (3, 4), laquelle soupape de pré-détente est actionnable dans la direction d'ouverture, pour le déverrouillage de la soupape à siège anti-retour (V), au moyen du piston annulaire de déverrouillage (15) en avance du décollement de l'élément de fermeture (23) du siège de soupape (21), **caractérisée en ce que** les raccords de pression (3, 4) sont réalisés en soi dans des extrémités de corps en vis-à-vis de l'axe principal de corps (X), et que l'élément de fermeture (23) est un piston avec la surface de siège (25) disposée du côté frontal et des nervures de guidage périphériques (24), entre lesquelles sont prévus des parcours d'écoulement de travail axiaux.

2. Soupape à siège anti-retour à déverrouillage hydraulique selon la revendication 1, **caractérisée en ce que** la soupape de pré-détente de déverrouillage (P) forme simultanément dans la soupape à siège anti-retour (V) une soupape de délimitation de pression (D) ouvrant dans la direction de verrouillage (A).

3. Soupape à siège anti-retour à déverrouillage hydraulique selon la revendication 1, **caractérisée en ce que** le corps (1) est un corps Ermeto (5) avec des sections de filetage extérieur (7, 9) aux deux extrémités.

4. Soupape à siège anti-retour à déverrouillage hydraulique selon la revendication 1, **caractérisée en ce qu'**un canal de pression de déverrouillage (11), qui débouche de l'extérieur latéralement dans le corps (1), comprend au moins une section de canal (11'), orientée essentiellement dans la direction axiale, dans l'intérieur du piston annulaire de déverrouillage (15).

5. Soupape à siège anti-retour à déverrouillage hydraulique selon la revendication 1, **caractérisée en ce qu'**une garniture de manchon (13), définissant dans le passage longitudinal (2) un compartiment annulaire (14) pour le piston annulaire de déverrouillage (15), et le ressort de fermeture (28) sont supportés par des circlips (12, 29) dans le passage longitudinal (2).

6. Soupape à siège anti-retour à déverrouillage hydraulique selon la revendication 1, **caractérisée en ce que** la soupape de pré-détente de déverrouillage (P) comprend, en tant
qu'élément de soupape pilote (35), une bille ou une tête de champignon, ainsi qu'un siège de soupape pilote (26) disposé dans le parcours d'écoulement de pré-détente, et que l'élément de soupape pilote (35) est sollicité par un ressort pilote (30), supporté dans un alésage axial (27) de l'élément de fermeture (23), en direction du siège de soupape pilote (26), le diamètre intérieur de l'alésage axial (27) dans la zone de l'élément de soupape pilote (35) étant de préférence plus grand que le diamètre intérieur du siège de soupape pilote (26).

7. Soupape à siège anti-retour à déverrouillage hydraulique selon la revendication 6, **caractérisée en ce que** l'alésage axial (27) fait partie du parcours d'écoulement de pré-détente, et comporte, de préférence, une butée de ressort (32) creuse, vissable, pour le ressort pilote (30).

8. Soupape à siège anti-retour à déverrouillage hydraulique selon la revendication 6, **caractérisée en ce qu'** une butée de ressort (32) de préférence vissable, fermant l'alésage axial, est disposée pour le ressort pilote (30) dans l'alésage axial (27), ressort par lequel est définie la pression de réponse de la soupape de limitation de pression (D), et que, sur le côté du siège de soupape pilote (26), opposé au piston annulaire de déverrouillage (15), dans l'élément de fermeture (23), des canaux transversaux (33) sont prévus dans le passage longitudinal (2) en direction du côté pression de verrouillage du siège de soupape (21).

9. Soupape à siège anti-retour à déverrouillage hydraulique selon la revendication 1, **caractérisée en ce que** la saillie axiale (17), disposée sur le piston annulaire de déverrouillage (15), présente un tourillon d'actionnement (18), dont le diamètre extérieur est plus petit que le diamètre extérieur de l'élément de soupape pilote (35), et qu'un épaulement (19) est prévu sur la saillie (17), de façon limitrophe au tourillon (18), pour la prise directe sur l'élément de fermeture (23).
